Europäisches Patentamt

European Patent Office

Office européen des brevets

(11) Numéro de publication: **0 457 670 B1**

(12) **FASCICULE DE BREVET EUROPEEN**

(45) Date de publication de fascicule du brevet: **16.08.95** (51) Int. Cl.⁶: **G02F 1/136**

(21) Numéro de dépôt: **91401241.4**

(22) Date de dépôt: **14.05.91**

---

(54) **Procédé de réalisation d'un écran d'affichage à matrice active et à condensateurs de stockage et écran obtenu de ce procédé.**

---

(30) Priorité: **15.05.90 FR 9006042**

(43) Date de publication de la demande:
**21.11.91 Bulletin 91/47**

(45) Mention de la délivrance du brevet:
**16.08.95 Bulletin 95/33**

(84) Etats contractants désignés:
**DE GB NL**

(56) Documents cités:
**EP-A- 0 103 523**

**JAPAN DISPLAY, 1989, pp. 514-517 ; Y. ASAI et al. : "A 6.7-in. square high-resolution full-color TFT-LCD"**

**PATENT ABSTRACTS OF JAPAN vol. 14, no. 48 (P-997)(3991) 27 Janvier 1990 ; & JP-A-1 277 217**

**PATENT ABSTRACTS OF JAPAN vol. 8, no. 245 (P-312)(1682) 10 Novembre 1984 ; & JP-A-59 119 322**

(73) Titulaire: **FRANCE TELECOM**
**Etablissement autonome de droit Public**
**(Centre National d'Etudes des Télécommuni-**
**cations),**
**38/40 rue du Général Leclerc**
**F-92131 Issy les Moulineaux (FR)**

(72) Inventeur: **Morin, François**
**Le Carpont Lanmerin**
**F-22300 Lannion (FR)**
Inventeur: **Le Contellec, Michel**
**3 Hameau du Chêne**
**F-22300 Lannion (FR)**

(74) Mandataire: **Des Termes, Monique et al**
**c/o Société de Protection des Inventions**
**25, rue de Ponthieu**
**F-75008 Paris (FR)**

---

## Description

La présente invention a pour objet un procédé de réalisation d'un écran d'affichage à matrice active et à condensateurs de stockage et un écran obtenu par ce procédé.

On sait qu'un écran d'affichage à matrice active est constitué schématiquement de deux plaques, la première étant recouverte d'une matrice de pavés conducteurs définissant des pixels, chaque pavé étant associé à un transistor d'adressage lui-même commandé par des lignes et des colonnes d'adressage et la seconde étant recouverte d'une contre-électrode. Un cristal liquide est inséré entre les deux plaques.

Récemment, sont apparus des écrans d'affichage à matrice active comprenant, en outre, des condensateurs de stockage. L'intérêt de ces condensateurs est de limiter les effets de l'élévation de température, qui, dans un écran traditionnel, fait décroître la constante de temps de la capacité du pixel, le cristal liquide et le transistor de commande devenant le siège de courants de fuite.

Des écrans d'affichage à matrice active et à condensateurs de stockage sont décrits par exemple dans le document GB-A-2 115 199, dans l'article de D. TOMITA et al. intitulé "A 6.5-in Diagonal TFT-LCD Module for Liquid Crystal TV" paru dans la revue SID 89 DIGEST, pp. 151-154 ainsi que dans l'article de Y. ASAI intitulé "A 6.7-in Square High-Resolution Full-Color TFL-LCD" paru dans la revue Japan Display 89, pp. 514-517.

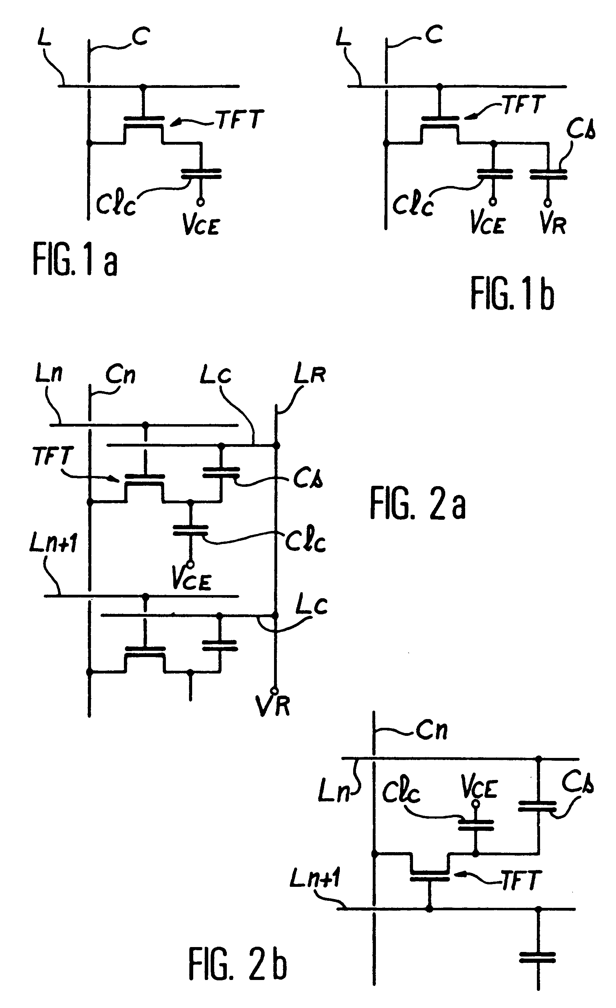

Les figures 1a et 1b d'une part et 2a, 2b d'autre part, permettent d'illustrer schématiquement cet art antérieur.

Sur la figure 1a est représentée une cellule comprenant un transistor TFT (cette appellation rappelant qu'il s'agit en général d'un transistor à couches minces), un condensateur Clc correspondant au cristal liquide inséré entre l'armature de la première plaque et la contre-électrode portée à un potentiel VCE. La ligne d'adressage commandant la grille du TFT est référencée L et la colonne d'adressage C.

la cellule de la figure 1b diffère de celle de la figure 1a par la présence d'un condensateur de stockage Cs, dont une armature est reliée au TFT et l'autre est portée à un potentiel de référence VR.

Les figures 2a et 2b montrent deux manières de commander un écran à condensateurs de stockage. Sur la figure 2a, les condensateurs de stockage correspondant à une même ligne Ln ont une de leurs armatures reliée à une électrode dédiée LC, spécialement réalisée à cet effet, toutes les lignes LC étant réunies à une bande de référence LR disposée sur le côté de l'écran et portée à un potentiel VR. Sur la figure 2b, les condensateurs de stockage Cs propres à une ligne Ln + 1 ont une armature reliée à la ligne précédente Ln.

Dans le premier cas, le potentiel de référence VR peut être le potentiel de la contre-électrode. Dans le second, le potentiel de référence est celui de la ligne précédente. Ce potentiel est bien fixe et peut donc servir de référence pendant le temps de trame, sauf durant le temps d'adressage où sa valeur est perturbée. Cette perturbation intervenant juste avant le rafraîchissement de la ligne considérée, elle n'a pas d'effet sur le potentiel final du pixel.

Pour réaliser de telles structures, de nombreux procédés sont possibles.

S'agissant d'écrans d'affichage traditionnels, sans condensateurs de stockage, le procédé le plus simple est celui qui est décrit dans le document FR-A-2 533 072. Ce procédé dit "à deux niveaux de masquage", parce qu'il ne requiert que deux photolithogravures, comprend essentiellement les opérations suivantes :

- préparation d'un substrat de verre par nettoyage physico-chimique,
- dépôt d'une couche de matériau conducteur transparent, par exemple en oxyde d'étain et d'indium (ITO),
- première photogravure, pour donner à la couche conductrice transparente la forme de colonnes et de pavés prolongés par un appendice,
- dépôt d'un empilement forme d'une couche semi-conductrice, d'une couche d'isolant et d'une couche métallique,
- seconde photogravure appliquée à l'empilement précédent pour définir des lignes chevauchant les appendices des pavés et croisant les colonnes, ce qui définit des transistors à couches minces.

Lorsqu'il s'agit de réaliser un écran à condensateurs de stockage, on se heurte à une difficulté particulière due à la réalisation des armatures desdits condensateurs.

Les procédés de réalisation connus requièrent au moins quatre niveaux de masquage et quelquefois six. Par exemple, dans la technique décrite dans l'article de O. TOMITA et al. visé plus haut, on dépose d'abord, sur un substrat en verre, une couche de Mo-Ta que l'on soumet à une première photogravure pour constituer les grilles des futurs transistors et l'une des armatures des condensateurs de stockage. On recouvre l'ensemble d'isolant. Puis on dépose une couche d'ITO et l'on procède à une deuxième photogravure pour constituer les secondes armatures des condensateurs de stockage. On dépose ensuite un semi-conducteur (a-Si), puis, par une troisième gravure, on ne laisse subsister ce semi-conducteur qu'au-dessus des grilles. Des couches conductrices (a-Si $n^+$, Mo/Al) sont alors déposées et gravées dans une quatrième opération de masquage et gravure.

La présente invention a pour but de réduire cette complexité et elle vise plus particulièrement à retrouver la simplicité du procédé dit à deux niveaux de masquage.

Ce but est atteint grâce à l'invention par un procédé qui reprend certaines opérations du procédé à deux niveaux de masquage décrit dans FR-A-2 533 072 et qui est caractérisé par le fait que, lors de la seconde photogravure, on laisse subsister des lignes capacitives disposées parallèlement aux lignes d'adressage et chevauchant une partie des pavés, chaque ligne capacitive formant, avec la partie du pavé qu'elle chevauche, le condensateur de stockage associé à ce pavé.

Dans une première variante, le procédé est caractérisé par le fait que les lignes capacitives sont des lignes dédiées à cette fonction et sont toutes reliées à une bande située sur le côté de l'écran.

Dans une seconde variante, le procédé est caractérisé par le fait que, lors de la seconde gravure, les lignes capacitives sont confondues avec les lignes d'adressage et chevauchent, d'une part, des segments des pavés pour former les condensateurs de stockage et, d'autre part, les divers appendices colonne ou pavé pour former les transistors d'adressage.

La présente demande a également pour objet un écran d'affichage obtenu par le procédé qui vient d'être défini. Cet écran est du type de ceux qui sont décrits dans FR-A-2 533 072 et il est caractérise par le fait qu'il comprend en outre des lignes capacitives formées dudit empilement de couches, ces lignes chevauchant une partie des pavés, ces lignes formant des condensateurs de stockage reliés aux pavés.

Dans un premier mode de réalisation, les lignes capacitives sont des lignes spécialement ajoutées à l'effet de produire une capacité supplémentaire.

Dans un second mode de réalisation, les lignes capacitives sont confondues avec les lignes d'adressage et chevauchent, d'une part, des segments de pavés pour former les condensateurs de stockage et d'autre part, les divers appendices colonne et pavé pour former les transistors d'adressage.

De toute façon, les caractéristiques et avantages de l'invention appaîtront mieux à la lumière de la description qui va suivre. Cette description porte sur des exemples de réalisation donnés à titre explicatif et nullement limitatif et elle se réfère à des dessins annexés, sur lesquels :

- les figures 1a, 1b, déjà décrites, représentent la structure générale des écrans sans et avec condensateurs de stockage ;

- les figures 2a, 2b, déjà décrites, illustrent deux moyens de commande pour des écrans à condensateurs de stockage ;
- la figure 3 montre, en vue de dessus, un écran selon l'invention dans un premier mode de réalisation avec électrode dédiée ;
- les figures 4a, 4b montrent deux coupes de l'écran de la figure 3 ;
- la figure 5 illustre, en vue de dessus, un deuxième mode de réalisation ;
- la figure 6 illustre, en vue de dessus, un troisième mode de réalisation ;
- la figure 7 illustre, en vue de dessus, un quatrième mode de réalisation ;
- la figure 8 illustre, en vue de dessus, un cinquième mode de réalisation ;
- la figure 9 montre le schéma électrique équivalent d'un écran selon la figure 8 ;
- la figure 10, montre en vue de dessus, un sixième mode de réalisation ;
- la figure 11 montre un écran dans lequel le condensateur de stockage est commandé par la ligne précédente ;
- la figure 12 montre une coupe de l'écran de la figure 11 ;
- la figure 13 illustre une dernière variante de l'écran selon l'invention.

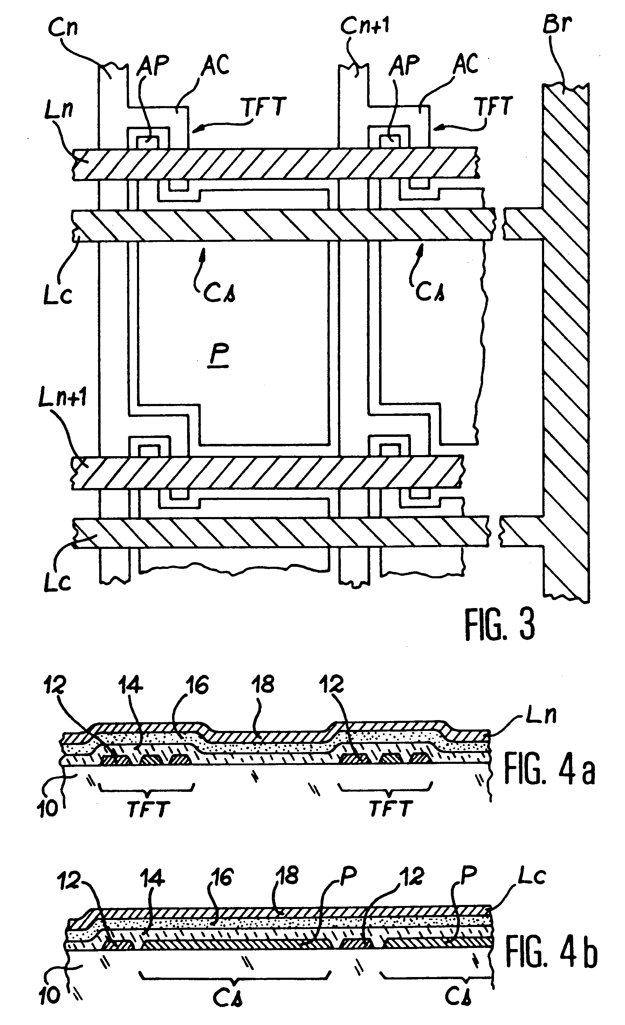

On voit, sur les figures 3, 4a et 4b, un écran d'affichage obtenu selon un mode de mise en oeuvre du procédé de l'invention. Sur une plaque de verre 10, on dépose une couche de matériau conducteur transparent 12, comme l'oxyde d'indium-étain ITO. Par une première photogravure à travers un premier niveau de masquage, on obtient des motifs constitués de colonnes Cn, Cn + 1, etc... et de pavés P. Ces motifs correspondent aux zones non hachurées de la figure 3. Chaque pavé P est prolongé par un appendice, dit appendice pavé AP. Dans la variante illustrée, chaque colonne est prolongée par un appendice dit appendice colonne AC, de forme recourbée. L'appendice pavé AP vient s'insérer entre la colonne et l'appendice colonne AC recourbé. Cette disposition est destinée à obtenir un double transistor de commande. Mais elle n'est pas obligatoire.

On dépose ensuite un empilement d'une couche semi-conductrice 14, par exemple en silicium, d'une couche isolante 16, par exemple en nitrure de silicium et d'une couche métallique 18, par exemple en aluminium.

Dans une seconde photogravure, à travers un second niveau de masquage, on définit des motifs tels que les motifs hachurés sur la figure 3, à savoir des lignes d'adressage Ln, Ln + 1, etc..., des lignes capacitives LC et une bande de référence Br sur le côté de l'écran.

Les lignes d'adressage Ln, Ln + 1 définissent des TFT (doubles dans la variante illustrée) et les lignes LC définissent, avec la couche conductrice de pavé P qu'elles recouvrent, les condensateurs de stockage recherches Cs.

La figure 4a correspond à une coupe le long d'une ligne d'adressage telle que Ln et fait apparaître les doubles transistors d'adressage, alors que la figure 4b montre une coupe le long d'une ligne capacitive LC et fait apparaître le condensateur de stockage entre LC et P.

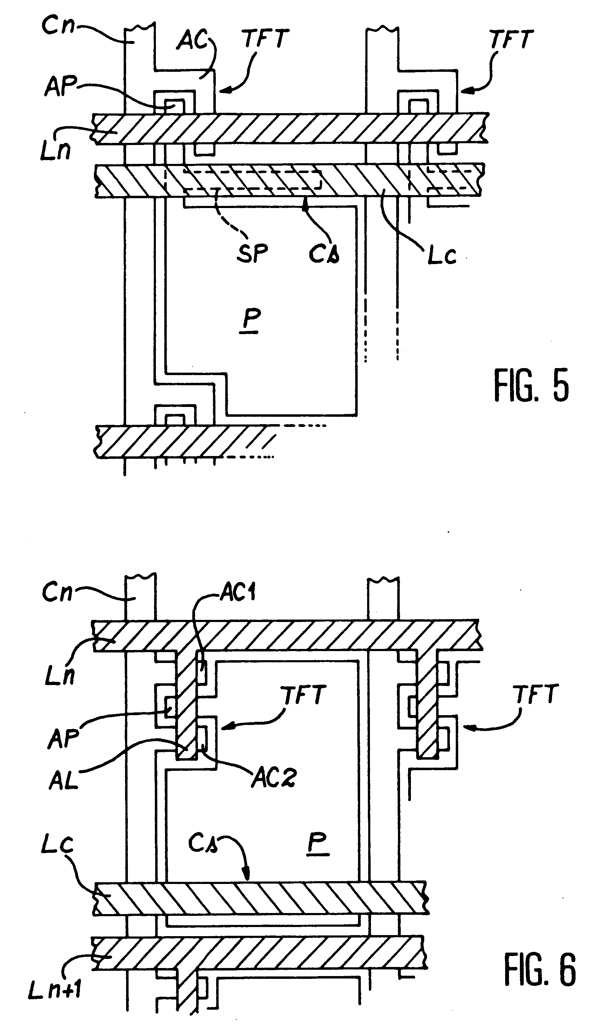

Dans la variante de la figure 5, on retrouve les mêmes éléments que sur la figure 3, avec les mêmes références, à cette différence près que, lors de la première gravure, on forme des pavés P se prolongeant par un segment SP, les lignes capacitives réalisées lors de la seconde gravure venant chevaucher ces segments pour former, avec ces segments, les condensateurs de stockage souhaités.

L'écran représenté sur la figure 6 diffère de celui de la figure 3 par le fait que, lors de la première gravure, on prolonge chaque colonne par deux appendices colonnes AC1, AC2 au niveau de chaque pavé, lequel comprend un appendice AP venant s'insérer entre les appendices colonne, et par le fait que, lors de la deuxième gravure, on prolonge chaque ligne au niveau de chaque pavé, par un appendice dit appendice ligne AL, qui vient chevaucher les appendices colonne AC1, AC2 et l'appendice pavé AP.

Par ailleurs, la ligne capacitive LC est toujours disposée en travers du pavé P pour former le condensateur de stockage Cs.

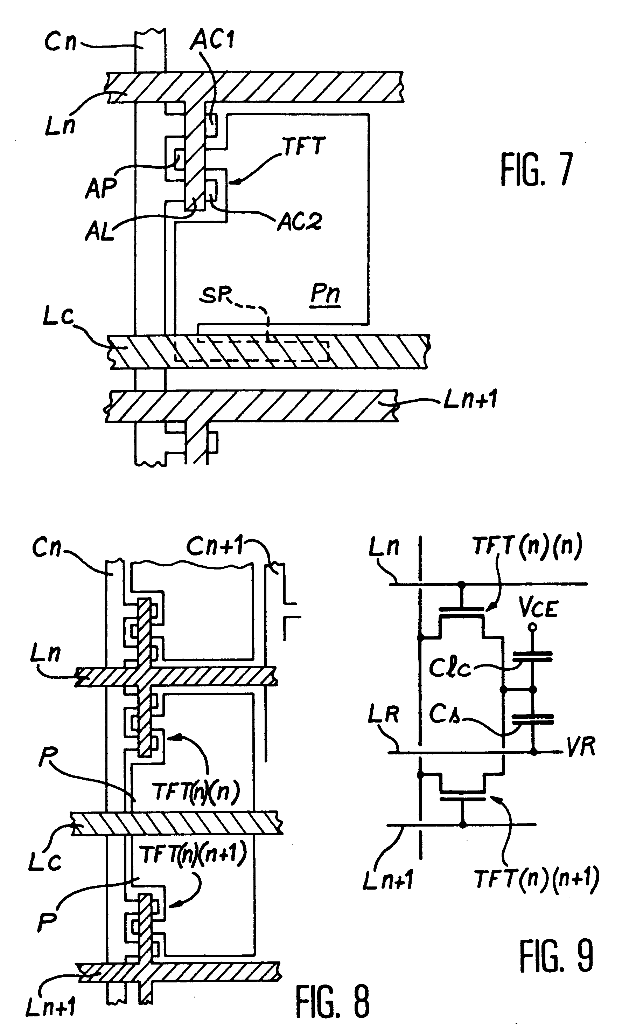

La figure 7 montre une variante qui combine la disposition de la figure 5 où chaque pavé est prolongé par un segment SP et celle de la figure 5 où l'appendice pavé AP vient s'insérer entre deux appendices colonne AC1, AC2.

Les figures 8 et 9 illustrent un cas où chaque pavé P est commandé par deux transistors d'adressage afin d'obtenir une certaine redondance. L'un des transistors TFT(n)(n) correspond à la ligne Ln et à la colonne Cn, l'autre, TFT(n + 1)(n), à la ligne Ln + 1 et à la même colonne Cn. Dans ce cas, la ligne capacitive LC chevauche le pavé P dans sa partie médiane, entre les deux lignes d'adressage successives Ln, Ln + 1.

La figure 9 représente le schéma électrique correspondant.

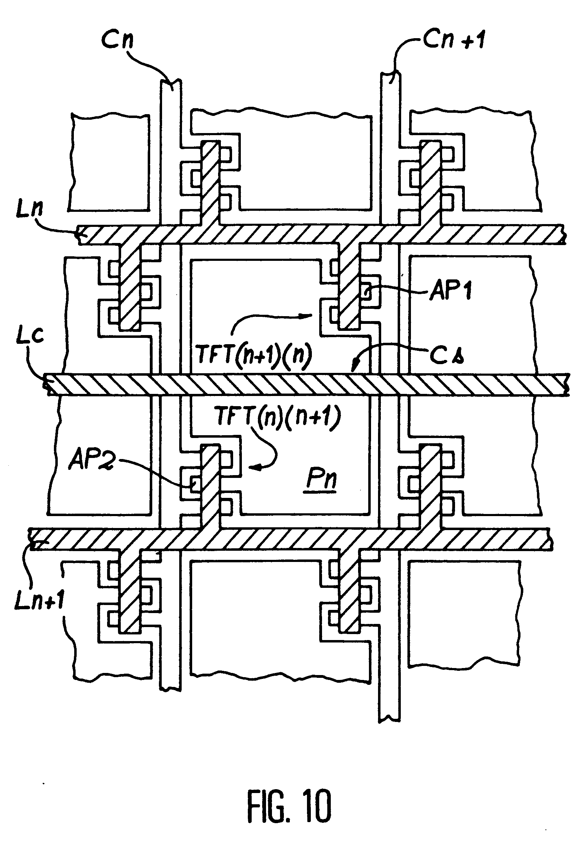

La variante illustrée sur la figure 10 correspond au cas où chaque pavé comprend deux appendices AP1, AP2, diagonalement opposés et engagés entre deux appendices colonne correspondant respectivement à la colonne Cn + 1 et à la colonne Cn. Un pavé Pn défini par une ligne Ln et une colonne Cn est donc commandé, de manière redondante, par deux doubles transistors, respectivement TFT(n + 1)(n) et TFT(n)(n + 1). En cas de coupure de la colonne Cn, le pixel est alimenté par la colonne Cn + 1.

Dans cette variante, la ligne capacitive recouvre les pavés dans leur zone médiane.

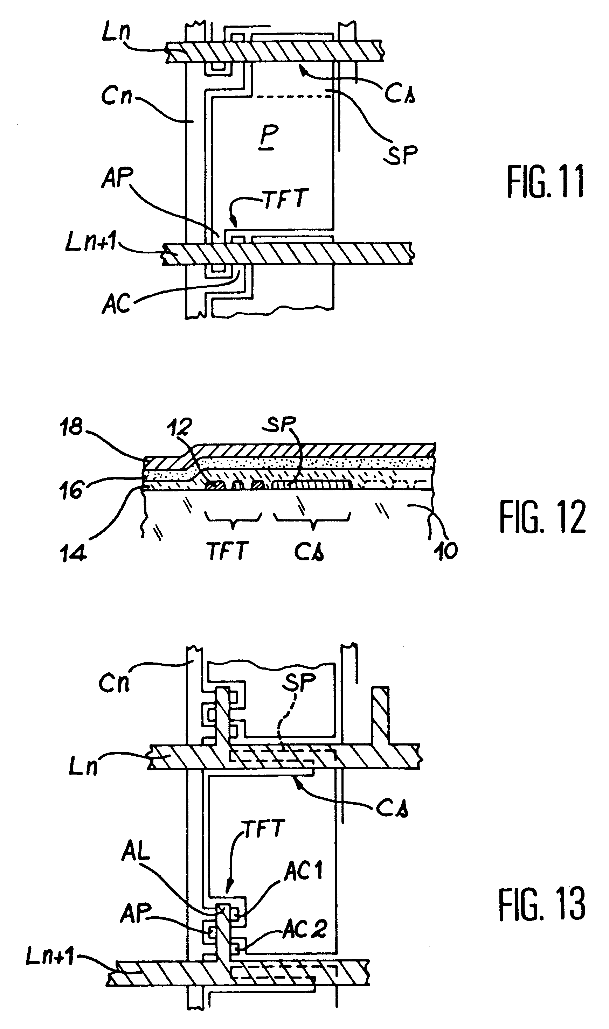

Dans toutes ces variantes, les condensateurs de stockage sont obtenus par des lignes affectées spécialement à cette fonction, les lignes venant s'ajouter aux lignes d'adressage. Dans une autre réalisation, ce sont les lignes d'adressage elles-mêmes qui remplissent cette fonction. Les figures 11 à 13 illustrent ce mode de réalisation.

Sur la figure 11, chaque pavé P est prolongé par un appendice AP formant un double transistor avec la ligne Ln + 1 et par un segment SP passant sous la ligne précédente Ln.

La figure 12 montre une coupe le long d'une ligne Ln. On y voit, sur le substrat 10, la couche conductrice 12 formant la colonne et son appendice, le pavé et son appendice et le segment supérieur du pavé voisin, la couche semi-conductrice 14, la couche isolante 16, la couche conductrice 18 formant la ligne Ln.

La figure 13 montre une variante à double transistor obtenu par deux appendices colonne AC1, AC2, un appendice pavé AP et un appendice ligne AL, la capacité de stockage étant obtenue par un segment SP prolongeant le pavé et disposé sous la ligne précédente Ln.

Dans tous ces exemples, la capacité de stockage résulte d'une ligne conductrice chevauchant un pavé conducteur, la séparation entre ces zones conductrices étant obtenue par la couche semi-conductrice (14) et couche isolante (16).

La valeur d'une telle capacité peut être calculée en prenant pour longueur, le pas P des pixels et pour largeur, la largeur W d'une ligne. On a alors

$$C_s = \varepsilon_0 \varepsilon_r \frac{P \cdot W}{d}$$

où d est l'épaisseur des couches séparant les armatures, $\varepsilon_r$ la constante diélectrique de ces couches et $\varepsilon_0$ la constante diélectrique du vide.

Dans la pratique, on a sensiblement :

P = 250μm
W = 20 μm
$\varepsilon_r$ = 7
d = 0,3μm
$\varepsilon_0$ = 1/36 $\pi$ $10^9$

ce qui donne, pour Cs, une valeur de $1,03.10^{-12}$, soit sensiblement 1pF.

Cette valeur est à comparer à la capacité du pixel qui, pour un pas de 250μm et une épaisseur de cristal liquide de 5μm, vaut environ 0,5 pF.

Les condensateurs formés selon l'invention ont donc une capacité supérieure à (ou de l'ordre de) la capacité du pixel, ce qui est bien le but recherché.

## Revendications

1. Procédé de réalisation d'un écran d'affichage comprenant une première plaque recouverte d'une matrice de pavés conducteurs ou pixels (P) reliés à des transistors d'adressage (TFT), des condensateurs de stockage (Cs), des colonnes (C) et des lignes (L) d'adressage, et une deuxième plaque recouverte d'une contre-électrode, procédé dans lequel, pour réaliser la première plaque :

   a) on dépose sur un substrat isolant (10) une couche de matériau conducteur transparent (12),

   b) par une première gravure à travers un premier niveau de masquage, on effectue une gravure de cette couche de matériau conducteurs transparent (12) pour laisser subsister des colonnes d'adressage (C) éventuellement munies d'appendices dits appendices colonne (AC), et une matrice de pavés (P), chaque pavé étant prolongé par au moins un appendice dit appendice pavé (AP) situé à proximité d'une colonne d'adressage (C) ou des appendices colonne correspondants (AC),

   c) on dépose sur l'ensemble un empilement de couches respectivement en matériaux semi-conducteur (14), isolant (16), et conducteur (18),

   d) par une seconde gravure à travers un second niveau de masquage, on effectue une gravure de cet empilement de couches pour laisser subsister des lignes d'adressage (L) avec éventuellement des appendices dits appendices ligne(AL), ces lignes (L) ou les appendices ligne correspondants(AL) chevauchant les colonnes (C) ou les appendices colonne correspondants (AC) ainsi que les appendices pavés (AP), pour former les transistors d'adressage (TFT),

   ce procédé étant caractérisé par le fait que, lors de la seconde gravure, on laisse subsister des lignes capacitives (LC) disposées parallèlement aux lignes d'adressage (L) et chevauchant une partie des pavés (P), chaque ligne capacitive (L) formant, avec la partie du pavé (P) qu'elle chevauche, le condensateur de stockage (Cs) associé à ce pavé (P).

2. Procédé selon la revendication 1, caractérisé par le fait que, lors de la première gravure, on forme des pavés (P) comprenant un segment (SP), les lignes capacitives (LC) réalisées lors de la seconde gravure venant chevaucher ces segments (SP) pour former, avec chacun de ces segments, un condensateur de stockage relié au pavé correspondant (P).

3. Procédé selon la revendication 1, caractérisé par le fait que, lors de la première gravure, on dote chaque pavé d'un deuxième appendice pavé (AP2), le premier appendice pavé (AP1) étant destine à être situé sous la future ligne d'adressage (Ln) de ce pavé et le second appendice pavé (AP2) étant destiné à être situé sous la ligne d'adressage suivante (Ln + 1), chaque pavé (P) étant ainsi commandé, de manière redondante, par deux lignes consécutives d'adressage (Ln, Ln + 1) à travers un premier transistor d'adressage (TFT(n + 1)-(n)) et à travers un second transistor d'adressage (TFT(n)(n + 1)), et par le fait que chaque ligne capacitive (LC) chevauche les pavés (P) dans leur partie médiane, entre deux lignes d'adressage successives (Ln, Ln + 1).

4. Procédé selon l'une quelconque des revendications 1 à 3, caractérisé par le fait que, lors de la seconde gravure, on grave en outre, dans l'empilement de couches, une bande (Br) située sur le côté de l'écran, toutes les lignes capacitives (LC) étant reliées à cette bande (Br).

5. Procédé selon la revendication 2, caractérisé par le fait que, lors de la seconde gravure, les lignes capacitives (LC) sont confondues avec les lignes d'adressage (Ln) et chevauchent, d'une part, les segments (SP) pour former les condensateurs de stockage (Cs) et, d'autre part, les divers appendices colonne ou pavé (AC, AP) pour former les transistors d'adressage (TFT).

6. Ecran d'affichage obtenu par le procédé selon l'une quelconque des revendications 1 à 5, cet écran comprenant :

   - une première plaque recouverte d'une matrice de pavés conducteurs ou pixels (P) munis d'un appendice dit appendice pavé (AP), des colonnes conductrices d'adressage (C) munies éventuellement d'appendices dits appendices colonne (AC) et, des lignes conductrices d'adressage (L) constituées par un empilement de trois couches, respectivement en matériau semi-conducteur (14), isolant (16) et conducteur (18), ces lignes formant, dans les zones de chevauchement avec les colonnes (C) ou les appendices colonne correspondants (AC) et les appendices pavé (AP), des transistors d'adressage (TFT),
- une seconde plaque recouverte d'une contre-électrode,

cet écran d'affichage étant caractérisé par le fait qu'il comprend en outre des lignes capacitives (LC) formées dudit empilement de couches (14, 16, 18), ces lignes chevauchant une partie des pavés (P), cette ligne (LC) formant des condensateurs de stockage (Cs) avec lesdits pavés (P).

7. Ecran d'affichage selon la revendication 6, caractérisé par le fait que chaque pavé (P) comprend un segment (SP), les lignes capacitives (LC) chevauchant ces segments (SP) pour former, avec ces segments, les condensateurs de stockage (Cs).

8. Ecran d'affichage selon la revendication 6, caractérisé par le fait que chaque colonne comprend, au niveau de chaque pavé, un appendice colonne (AC) recourbé entourant l'appendice pavé (AP), lequel est inséré entre la colonne et l'appendice colonne recourbé, la ligne d'adressage chevauchant lesdits appendices et la colonne formant ainsi un transistor double.

9. Ecran d'affichage selon la revendication 6, caractérisé par le fait que chaque colonne comprend au niveau de chaque pavé deux appendices colonne (AC1, AC2) encadrant l'appendice pavé (AP) et chaque ligne comprend, au niveau de chaque pavé, un appendice ligne (AL) chevauchant les deux appendices colonne (AC1, AC2) et l'appendice pavé (AP), le transistor d'adressage étant alors double.

10. Ecran d'affichage selon la revendication 6, caractérisé par le fait que chaque pavé (P) est relié à deux transistors d'adressage (TFT(n)(n)) et (TFT(n + 1)(n)) l'un correspondant à une ligne d'adressage (Ln) et l'autre à la ligne suivante (Ln + 1), chaque ligne capacitive (LC) chevauchant les pavés (P) dans leur partie médiane, entre deux lignes d'adressage successives (Ln, Ln + 1).

11. Ecran d'affichage selon l'une quelconque des revendications 6 à 8, caractérisé par le fait qu'il comprend une bande de référence (Br) constituée dudit empilement (14, 16, 18), cette bande étant gravée sur le côté de la plaque, toutes les lignes capacitives (LC) étant reliées à cette bande (Br).

12. Ecran d'affichage selon la revendication 7, caractérisé par le fait que les lignes capacitives (LC) sont confondues avec les lignes d'adressage (L) et chevauchent, d'une part, lesdits segments de pavés (SP) pour former les condensateurs de stockage (Cs) et d'autre part, les divers appendices colonne et pavé (AC, AP) pour former les transistors d'adressage (TFT).

**Claims**

1. Method for embodying a display screen including a first plate covering a matrix of conductive blocks or pixels (P) connected to addressing transistors (TFT), storage capacitors (Cs), addressing columns (C) and addressing lines (L), and a second plate covered with a counterelectrode, wherein so as to embody the first plate:

a) a film of a transparent conductive material (12) is deposited on a nonconducting substrate (10),

b) by means of a first etching through a first masking level, this film of a transparent conductive material (12) is etched so as to allow addressing columns (C) possibly provided with lengthening pieces known as column lengthening pieces (AC) to exist and a matrix of blocks (P), each block being extended by at least one lengthening piece known as a block lengthening piece (AP) situated close to an addressing column (C) or the corresponding column lengthening pieces (AC),

c) a stack of films of semiconductor (14), nonconducting (16) and conductive (18) materials is deposited respectively on the unit,

d) by means of a second etching through a second masking level, this stacking of films is etched so as to allow for the existence of addressing lines (L) with possibly lengthening pieces known as line lengthening pieces (AL), these lines (L) or the corresponding line lengthening pieces (AL) overlapping the columns (C) or the corresponding column lengthening pieces (AC), as well as the block lengthening pieces (AP) so as to form the addressing transistors (TFT),

characterized in that during the second etching, capacitive lines (LC) are allowed to exist disposed parallel to the addressing lines (L) and overlapping one portion of the blocks (P), each capacitive line (L) forming, along with the portion of the block (P) it overlaps, the storage capacitor (Cs) associated with this block (P).

2. Method according to claim 1, characterized in that during the first etching, blocks (P) are formed comprising a segment (SP), the capacitive lines (LC) embodied during the second etching overlapping these segments (SP) so as to form, along with each of these segments, a storage capacitor connected to the corresponding block (P).

3. Method according to claim 1, characterized in that during the first etching, each block is provided with a second block lengthening piece (AP2), the first block lengthening piece (AP1) being intended to be situated under the future addressing line (Ln) of this block and the second block lengthening piece (AP2) being intended to be situated under the next addressing line (Ln + 1), each block (P) thus being controlled redundantly by two consecutive addressing lines (Ln, Ln + 1) through a first addressing transistor (TFT(n + 1)(n)) and through a second addressing transistor (TFT-(n)(n + 1)), and in that each capacitive line (LC) overlaps the blocks (P) in their median section between two successive addressing lines (Ln,Ln + 1).

4. Method according to any one of the claims 1 to 3, characterized in that during the second etching, in the stack of films, a strip (Br) situated on the side of the screen is also etched, all the capacitive lines (LC) being connected to this strip (Br).

5. Method according to claim 2, characterized in that during the second etching, the capacitive lines (LC) are merged with the addressing lines (Ln) and overlap firstly the segments (SP) so as to form the storage capacitors (Cs), and secondly the various column or block lengthening pieces (AC, AP) so as to form the addressing transistors (TFT).

6. Display screen obtained by the method according to any one of the claims 1 to 5, characterized in that this screen includes:
   - a first plate covered by a matrix of conductive blocks or pixels (P) provided with a lengthening piece known a a block lengthening piece (AP), conductive addressing columns (C), possibly provided with lengthening pieces known as column lengthening pieces (AC), and addressing conductive lines (L) constituted by a stacking of three films made of a semi-conductive material (14), a nonconductive material (16) and a conductive material (18) respectively, these lines forming in the overlapping zones, together with the columns (C) or the corresponding column lengthening pieces (AC) and the block lengthening pieces (AP), addressing transistors (TFT),
   - a second plate covered by a counter-electrode, this display screen being characterized in that it further includes capacitive lines (LC) formed from said stacking of the films (14,16,18), these lines overlapping one portion of the blocks (P), this line (LC) forming storage capacitors (Cs) connected to the blocks (P).

7. Display screen according to claim 6, characterized in that each block (P) comprises a segment (SP), the capacitive lines (LC) overlapping these segments (SP) so as to form, along with these segments, the storage capacitors (Cs).

8. Display screen according to claim 6, characterized in that each column includes at the level of each block a bent column lengthening piece (AC) surrounding the block lengthening piece (AP) which is inserted between the column and the bent column lengthening piece, the addressing line overlapping said lengthening pieces and the column, thus forming a double transistor.

9. Display screen according to claim 6, characterized in that each column includes at the level of each block two column lengthening pieces (AC1,AC2) framing the block lengthening piece (AP) and each line includes at the level of each block a line lengthening piece (AL) overlapping the two column lengthening pieces (AC1,AC2) and the block lengthening piece (AP), the addressing transistor then being double.

10. Display screen according to claim 6, characterized in that each block (P) is connected to two addressing transistors (TFT(n)(n)) and (TFT-(n + )(n)), one corresponding to one addressing line (Ln) and one to the next line (Ln + 1), each capacitive line (LC) overlapping the blocks (P) in their median portion between two successive addressing lines (Ln,Ln + 1).

11. Display screen according to any one of the claims 6 to 8, characterized in that it includes a reference strip (Br) constituted by said stacking (14,16,18), this strip being etched on the side of the plate, all the capacitive lines (LC) being connected to this strip (Br).

12. Display screen according to claim 7, characterized in that the capacitive lines (LC) are merged with the addressing lines (L) and firstly overlap said segments (SP) of the blocks so as to form the storage capacitors (Cs), and secondly the various column and block lengthening pieces (AC,AP)so as to form the addressing transistors (TFT).

**Patentansprüche**

1. Verfahren zur Herstellung eines Anzeigeschirms, umfassend eine erste Platte, bedeckt durch eine Matrix aus leitenden Plättchen oder Pixel (P), verbunden mit Adressierungstransistoren (TFT), Speicherkondensatoren (Cs), Adressierungspalten (C) und -zeilen (L), und eine zweite Platte, bedeckt mit einer Gegenelektrode, wobei dieses Verfahren zur Herstellung der ersten Platte folgende Schritte umfaßt:
   a) man scheidet auf einem isolierenden Substrat eine Schicht aus transparentem leitendem Material (12) ab,
   b) mittels einer ersten Ätzung durch ein erstes Maskierniveau führt man eine Ätzung dieser Schicht aus transparentem leitendem Material (12) durch und läßt dabei Adressierungsspalten (C) stehen, eventuell versehen mit Spaltenansätze genannten Ansätzen (AC) und einer Matrix aus Plättchen (P), wobei jedes Plättchen verlängert ist durch wenigstens einen Plättchenansatz genannten Ansatz (AP), nahe bei einer Adressierungsspalte (C) oder entsprechenden Spaltenansätzen (AC) befindlich,
   c) man scheidet auf dem Ganzen einen Stapel von Schichten aus jeweils halbleitendem (14), isolierendem (16) und leitendem (18) Material ab,
   d) mittels einer zweiten Ätzung durch ein zweites Maskierniveau führt man eine Ätzung dieses Schichtenstapels durch und läßt dabei Adressierungszeilen (L) stehen, ebentuell versehen mit Zeilenansätze genannten Ansätzen (AL), wobei diese Zeilen (L) oder die entsprechenden Zeilenansätze (AL) die Spalten (C) oder die entsprechenden Spaltenansätze (AC) ebenso überlappen wie die Plättchenansätze (AP), um die Adressierungstransistoren (TFT) zu bilden,
   wobei dieses Verfahren
   **dadurch gekennzeichnet** ist, daß man bei der zweiten Ätzung kapazitive Zeilen (LC) stehen läßt, parallel zu den Adressierungszeilen (L) angeordnet und einen Teil der Plättchen (P) überlappend, wobei jede kapazitive Zeile (L) mit dem Teil des Plättchen (P), den sie überlappt, den diesem Plättchen (P) zugeordneten Speicherkondensator (Cs) bildet.

2. Verfahren nach Anspruch 1, dadurch gekennzeichnet, daß man bei der ersten Ätzung Plättchen (P) bildet, die ein Segment (SP) umfassen, wobei die bei der zweiten Ätzung hergestellten kapazitiven Zeilen (LC) diese Segmente (SP) überlappen, um mit jedem dieser Segmente einen mit dem entsprechenden Plättchen (P) verbundenen Speicherkondensator zu bilden.

3. Verfahren nach Anspruch 1, dadurch gekennzeichnet, daß man bei der ersten Ätzung jedes Plättchen mit einem zweiten Plättchenansatz (AP2) versieht, wobei vorgesehen ist, daß der erste Plättchenansatz (AP1) sich unter der künftigen Adressierungszeile (Ln) dieses Plättchens befindet und der zweite Plättchenansatz (AP2) sich unter der folgenden Adressierungszeile (Ln + 1) befindet, und jedes Plättchen (P) also auf redundante Weise über zwei aufeinanderfolgende Adressierungzeilen (Ln, Ln + 1) gesteuert wird durch einen ersten Adressierungstransistor (TFT(n + 1)(n) und durch einen zweiten Adressierungstransistor (TFT(n)(n + 1), und dadurch, daß jede kapazitive Zeile (LC) die Plättchen (P) in ihrem Mittelteil überlappt, zwischen zwei aufeinanderfolgenden Adressierungszeilen (Ln, Ln + 1).

4. Verfahren nach einem der Ansprüche 1 bis 3, dadurch gekennzeichnet, daß man bei der zweiten Ätzung außerdem in dem Schichtenstapel einen auf der Seite des Schirms befindlichen Streifen (Br) ätzt, wobei alle kapazitiven Zeilen (LC) mit diesem Streifen (Br) verbunden sind.

5. Verfahren nach Anspruch 2, dadurch gekennzeichnet, daß bei der zweiten Ätzung die kapazitiven Zeilen (LC) zusammenfallen mit den Adressierungszeilen (Ln) und einerseits die Segmente (SP) überlappen, um die Speicherkondensatoren (Cs) zu bilden, und andererseits die diversen Spalten- oder Plättchenansätze (AC, AP), um die Adressierungstransistoren (TFT) zu bilden.

6. Anzeigeschirm, hergestellt durch das Verfahren nach den Ansprüchen 1 bis 5, wobei dieser Schirm umfaßt:
   - eine erste Platte, bedeckt durch eine Matrix aus leitenden Plättchen oder Pixel (P), versehen mit einem Plättchenansatz genannten Ansatz (AP) und Adressierungsleiterspalten (C), eventuell versehen mit Spaltenansätze genannten Ansätzen (AC) und Adressierungsleiterspalten (L), gebildet durch einen Stapel aus drei Schichten, jeweils aus halbleitendem (14), isolierendem (16) und leitendem (18) Material, wobei diese Zeilen in Zonen der Überlappung mit den Spalten (C) oder den entsprechenden Spaltenansätzen (AC) und den Plättchenansätzen (AP) Adressierungstransistoren (TFT) bilden,

- eine zweite Platte, bedeckt durch eine Gegenelektrode,

wobei dieser Anzeigeschirm **dadurch gekennzeichnet** ist, daß er außerdem kapazitive Zeilen (LC) umfaßt, gebildet durch den genannten Schichtenstapel (14, 16, 18), diese Zeilen einen Teil der Plättchen (P) überlappen und diese Zeile (LC) mit den Plättchen (P) Speicherkondensatoren (Cs) bildet.

7. Anzeigeschirm nach Anspruch 6, dadurch gekennzeichnet, daß jedes Plättchen (P) ein Segment (SP) umfaßt, wobei die kapazitiven Zeilen (LC) diese Segmente (SP) überlappen, um mit diesen Segmenten die Speicherkondensatoren (Cs) zu bilden.

8. Anzeigeschirm nach Anspruch 6, dadurch gekennzeichnet, daß jede Spalte in Höhe jedes Plättchens einen gekrümmten Spaltenansatz (AC) umfaßt, den Plättchenansatz (AP) umgebend, der eingefügt ist zwischen die Spalte und den gekrümmten Spaltenansatz, wobei die die besagten Ansätze überlappende Adressierungszeile und die Spalte somit einen doppelten Transistor bilden.

9. Anzeigeschirm nach Anspruch 6, dadurch gekennzeichnet, daß jede Spalte in Höhe jedes Plättchens zwei Spaltenansätze (AC1, AC2) umfaßt, die den Plättchenansatz (AP) umrahmen, und jede Zeile in Höhe jedes Plättchens einen Zeilenansatz (AL) umfaßt, der die beiden Spaltenansätze (AC1, AC2) und den Plättchenansatz (AP) überlappt, wobei der Adressierungstransistor dann doppelt ist.

10. Anzeigeschirm nach Anspruch 6, dadurch gekennzeichnet, daß jedes Plättchen (P) verbunden ist mit zwei Adressierungstransistoren (TFT(n)(n)) und (TFT(n + 1)(n), wobei der eine einer Adressierungzeile (Ln) und der andere der folgenden Zeile (Ln + 1) entspricht und jede kapazitive Zeile (LC) die Plättchen in ihrem Mittelteil überlappt, zwischen zwei aufeinanderfolgenden Adressierungszeilen (Ln, Ln + 1).

11. Anzeigeschirm nach einem der Ansprüche 6 bis 8, dadurch gekennzeichnet, daß er einen aus dem genannten Stapel (14, 16, 18) gebildeten Referenzstreifen (Br) umfaßt, wobei dieser Streifen auf der Seite der Platte geätzt ist und alle kapazitiven Zeilen (LC) mit diesem Streifen (Br) verbunden sind.

12. Anzeigeschirm nach Anspruch 7, dadurch gekennzeichnet, daß die kapazitiven Zeilen (LC) zusammenfallen mit den Adressierungszeilen L und einerseits die genannten Plättchensegments (SP) überlappen, um die Speicherkondensatoren (Cs) zu bilden, und andererseits die diversen Spalten- und Plättchenansätze (AC, AP), um die Adressierungstransistoren (TFT) zu bilden.

FIG.1 a

FIG.1 b

FIG. 2 a

FIG. 2 b

FIG. 3

FIG. 4 a

FIG. 4 b

FIG. 5

FIG. 6

FIG. 7

FIG. 8

FIG. 9

FIG. 10

FIG. 11

FIG. 12

FIG. 13